# EUROPEAN PATENT SPECIFICATION

(11) **EP 1 272 256 B1**
(45) Date of publication and mention of the grant of the patent: **09.01.2008**
(21) Application number: 00929970.2
(22) Date of filing: 24.03.2000
(51) Int. Cl.: B01D 46/52

(54) **FOLDED FILTER**
FALTENFILTER
FILTRE PLISSÉ

(43) Date of publication of application: 08.01.2003
(73) Proprietor: CAMFIL AB, 619 33 Trosa (SE)
(72) Inventor: ENBOM, Kjell, S-610 72 Vagnhärad (SE)
(74) Representative: Berglund, Erik Wilhelm
(86) International application number: PCT/SE2000/000590
(87) International publication number: WO 2001/072399

(56) References cited:
- EP-A1- 0 377 419
- EP-A1- 0 377 420
- EP-A1- 0 948 986
- EP-A2- 0 643 115
- DATABASE WPI Week 199413, Derwent Publications Ltd., London, GB; AN 1994-107040, XP002956071 & JP 6 057 224 A (TOYODA GOSEI KK) 01 March 1994

## Description

A practical and economic way to produce filters is to use strings of melt glue on a filter media that is then folded so that the still melt glue fix the folds to each other prior to hardening simultaneously serving as distance elements and fixture resulting in a filter matrix that then can be arranged in a frame to produce a filter. From EP 0 377 419 it is known to use intermittent strings to produce folded filters with a very precise wedge shape for the folds which in turn gives optimal flow conditions. From EP 0 377 420 it is further known to use the very same glue strings that are used to hold the folds together to provide the folded filter matrix with a flat filter media membrane on the exit side, which promotes a very even flow from the filter so that it can be used at clean room work stations.

Although the melt glue string filters have many good properties and enable practical fabrication solutions they are not free from drawbacks. One such drawback is that in reality it is not always easy to control the temperature conditions at all the individual nozzles for the melt glue. This means that the dispensed amount and its shape on the filter media will vary as thus the quality of the filter. A second drawback is that the glue strings have a rather limited span of dimension possibilities leading to an almost standardized size for the folds or the distance between them. A third drawback is the cost. In a glue string filter matrix a major part of the cost is that of the melt glue. Also a major part of the material in filter will be the melt glue, which is a drawback at recycling and also from the point of fire conditions since the melt glue bums easily even if the filter material can be of glass that doesn't burn at all.

From the above it is apparent that further development would be welcome and needed.

The object of the invention is to eliminate some of the above mentioned drawbacks and reduce some others.

In accordance with the invention this is done by using a glue with an expandable filler. The volume of the glue is reduced diminishing the cost of glue and the amount of burnable matter and simultaneously as a good control of the glue strings and thus the distance between the filter media pleats can be achieved.

The expandable filler may be so called expandable microspheres or some other filler with an expansion that can be triggered on demand. The expandable microspheres may be constituted by minute thermoplastic gasfilled balloons. When these balloons are heated the material becomes plastic at the same time as the gas expands giving an increase in size that then remain since it is a plastic expansion, such microspheres are for instance sold by Casco Products

Preferably the glue is solvent based. This means for a start that the precision in the administration of the glue can be increased since working conditions are more easily maintained at constant values throughout the filter matrix and also over time. Since the viscosity is much lower than for melt glue the glue can be administrated in extremely precise patterns, in particular since the viscosity of solvent based glues are much less temperature dependent.

This precision also means that extremely fine folds can be made and retained in position. This does not only mean that a large filter area can be achieved, but also that extremely small filters can be made.

In the case of an expandable filler in a melt glue the expandable filler may have been admixed and expanded before administration or may be added and expanded simultaneously with administration in for instance strings on a filter material. Alternatively the expansion may be triggered in some other way than by an increased temperature.

Preferably the expandable filler is unexpanded when applied to the filter media and expanded at a later stage. In particular the glue can be hardened or solidified before the expanding of the filler. For instance the solvent can be vented away from the glue when the filter material is still straight and unfolded. The filter material is then folded and the preferably still tacky glue strings adhere to each other and opposing filter media. Then the filler material is expanded so that the pleats open up to the intended width. Since the glue can be administrated with great precision also the opening forces in each fold will be conform giving very conform folds and thus an even flow through the filter. The glue may also be of the type that becomes tacky when heated for instance at the expansion.

In a most preferable embodiment the glue is a waterbased vinyl or acrylic glue to which has been added microscopic temperature expandable spheres . The glue with its spheres is administrated as in conventional glue string filters and the glue is dried by subjecting it to infrared light, microwaves or hot air. Preferably the glue remains tacky after drying or become tacky at an increase in temperature. The filter material is folded and then the filter has its temperature raised to 90 - 100 °C at which the microscopic spheres are expanded pressing the folds apart or filling up the distances between the folds.

In addition to the above improvement in quality at the known glue string filter production the invention also allows the filter matrix production to be temporarily stopped before the filler expansion, that may then be carried out at a later stage and even at some other location. This means that the folded filter material can be transported in a more compact and space saving form, that will also be less vulnerable. Then the filter matrix can be expanded directly on the location where it is intended to be, perhaps even without having to be mounted in a separate frame. The resilience in the filler can take up possible tolerances so that the precise fitting will be easy.

Since the adhering of the glue and the expanding of the spheres have so differing conditions for execution the expanding can be saved to a later time and in fact a ready filter matrix can be compactly transported in an essentially compressed state and at the mounting of the matrix the temperature is increased so that the spheres expand and press the filter folds apart so that the filter matrix as a whole expand and fill out a filter frame, that may even be integral with some apparatus or machine. This means savings in the way of transport space and small series application since the matrix can adopt to different frame or opening sizes or even shapes. A self adhering or tacky glue can be used or indeed a glue that when heated with the expansion of the filler becomes tacky although it until then is easy to handle.

Since the expansion is independent of the drying it is also possible to apply glue in several different steps with expansion for one purpose or the other between the glue applying steps or indeed the expansion can be only one final expansion where all filler material is expanded. In this way different mixtures can be applied at different locations with different purposes and percentages. For instance successive essentially identical glue depositions can give a considerable thickness for the distance elements. This means that the glue string filters may be made larger with wider openings between the pleats.

By using a comparatively low micro sphere content and or small microspheres the distance in the pleat can be brought down to a single sphere layer enabling ultra small filters from for instance expanded PTFE with a surprisingly large filter area for their size. For instance filters for discdrives, computers and small machines and the like can be fabricated in this way.

It should also be mentioned that in comparison to the prior art the wear on the tools is far less with the invention reducing fabrication cost. The costs are also reduced by the decrease in glue and although the microspheres in themselves are comparatively expensive the invention brings an overall cost reduction.

It should further be mentioned that the microspheres can be destroyed by subjecting them to an increased temperature. This means that the filter when used can be removed by heating it so that it shrinks, which also will reduce the space needed when transporting it to recycling, as well as prevent its reuse.

Even if one of the major advantages of the invention lies in the possibility to postpone expansion, expanding may take place simultaneously with administration of the glue.

The filler may not necessarily have to be added to the glue far in advance, but instead one can consider a mixing more or less simultaneous with the administration of the glue on the filter media. Also the glue need not be seen as the main component of the glue strings in their unexpanded state. Instead the glue content be reduced so that the expandable filler, possibly in the shape of microspheres, have a coating of glue for the adhering to each other and the filter material. This can for instance be controlled by the way in which mixing is done and the amount of solvent in the glue.
In a further development of the invention a filter media is folded to pleats, that are then held with the pleats essentially compressed and a layer with embedded expandable filler bodies, for instance in the shape of micro spheres, and a comparatively small amount of solvent based glue is applied to the filter faces constituted of the tips of the pleats, the glue is dried and then the filler is expanded opening up the filter pleats at the same time as the layer is expanded so that it becomes air permeable. In this way the filter may be self contained and sealed until it by expansion, for instance through heating is made ready for use.

Instead of using a layer of glue and filler over the filter media glue strings may be used that are only in contact with the tips of the compressed pleated filter media. The glue is hardened and then the strings are heated and expanded, which means that they become longer and open up the filter pleats.

## Claims

1. Method for the fabrication of pleated filters with distance elements constituted of strings of glue, **characterized in that** the glue strings contain expandable fillers with an expansion that can be triggered on demand.

2. Method according to claim 1, **characterized in that** the glue is dried or solidified before the filler is expanded.

3. Method according to claim 1, **characterized in that** after the applying of the glue the filter is folded and the glue hardened, whereafter the filler is expanded either directly after the hardening or at some later time, for instance after transport to the place of use.

4. Method according to claim 1, **characterized in that** the glue is died or solidified after the filler is expanded or simultaneously with the expansion of the filler.

5. Method according claim 1, **characterized in that** the filler is expanded when the filter has been or is in the process of being mounted in a frame or directly in some apparatus.

6. Method according to claim 1, **characterized in that** glue with expandable filler is applied, expanded and hardened whereafter more glue provided with an expandable filler is applied at the same places to give thicker distance elements or to achieve other objects.

7. Method according to any of the preceding claims **characterized in that** the expandable filler is constituted by micro spheres with a controllable triggering of the expansion that is independent of the administration and drying of the glue.

8. Method according to claim 7, **characterized in that** the spheres are expanded by being heated.

9. Method according to claim 7 or 8 **characterized in that** the used glue is solvent based, in particular water based and or hot melt.

10. Method according to claim 7, 8 or 9 **characterized in that** the used glue remains tacky after drying.

11. Method according to any of the preceding claims **characterized in that** the expandable filler has an independent expansion mechanism that can be essentially independent of the vaporizing of the solvent, in particular the expansion can be triggered at a later stage.

12. Method according to any of the preceding claims **characterized in that** the glue contains expandable fillers with different expansion mechanisms or parameters so that expansion can be triggered at different times for different fillers.

13. Method according to any of the preceding claims **characterized in that** with the pleats essentially compressed a layer with embedded expandable filler bodies, for instance in the shape of micro spheres, and a comparatively small amount of solvent based glue is applied to the filter faces constituted of the tips of the pleats, the glue is dried and then the filler is expanded opening up the filter pleats at the same time as the layer is expanded so that it becomes air permeable.

14. A pleated filter with glue strings as distance elements between the pleats, **characterized in** the presence of expanded micro spheres in the glue constituting the distance elements.

## Patentansprüche

1. Verfahren für die Herstellung von Faltenfiltern mit Abstandselementen, die aus Klebstofffäden bestehen, **dadurch gekennzeichnet, dass** die Klebstofffäden expansionsfähige Füllstoffe mit einer Expansion enthalten, die auf Anforderung ausgelöst werden kann.

2. Verfahren nach Anspruch 1, **dadurch gekennzeichnet, dass** der Klebstoff vor dem Expandieren des Füllstoffs getrocknet oder verfestigt wird.

3. Verfahren nach Anspruch 1, **dadurch gekennzeichnet, dass** nach dem Aufbringen des Klebstoffs der Filter gefaltet und der Klebstoff gehärtet wird, wonach der Füllstoff entweder direkt nach dem Härten oder zu einem späteren Zeitpunkt beispielsweise nach dem Transport zu dem Ort der Verwendung expandiert wird.

4. Verfahren nach Anspruch 1, **dadurch gekennzeichnet, dass** der Klebstoff nach dem Expandieren des Füllstoffs oder gleichzeitig mit dem Expandieren des Füllstoffs getrocknet oder verfestigt wird.

5. Verfahren nach Anspruch 1, **dadurch gekennzeichnet, dass** der Füllstoff expandiert wird, wenn der Filter in einen Rahmen oder direkt in eine Vorrichtung eingesetzt wurde oder gerade eingesetzt wird.

6. Verfahren nach Anspruch 1, **dadurch gekennzeichnet, dass** der Klebstoff mit dem expansionsfähigen Füllstoff aufgebracht, expandiert und gehärtet wird, wonach mehr Klebstoff, der mit einem expansionsfähigen Füllstoff versehen wurde, auf die gleichen Stellen aufgebracht wird, um dickere Abstandselemente zu ergeben oder um andere Aufgaben zu erzielen.

7. Verfahren nach einem der vorhergehenden Ansprüche, **dadurch gekennzeichnet, dass** der expansionsfähige Füllstoff durch Mikrokugeln mit einem steuerbaren Auslösen der Expansion gebildet ist, das von dem Aufbringen und Trocknen des Klebstoffs unabhängig ist.

8. Verfahren nach Anspruch 7, **dadurch gekennzeichnet, dass** die Kugeln durch Erhitzen expandiert werden.

9. Verfahren nach Anspruch 7 oder 8, **dadurch gekennzeichnet, dass** der verwendete Klebstoff lösungsmittelbasiert, insbesondere wasserbasiert und/oder heißschmelzend ist.

10. Verfahren nach Anspruch 7, 8 der 9, **dadurch gekennzeichnet**, das der verwendete Klebstoff nach dem Trocknen klebrig bleibt.

11. Verfahren nach einem der vorhergehenden Ansprüche, **dadurch gekennzeichnet, dass** der expansionsfähige Füllstoff einen unabhängigen Expansionsmechanismus besitzt, der im Wesentlichen unabhängig von dem Verdunsten des Lösungsmittels ist, insbesondere kann die Expansion in einer späteren Phase ausgelöst werden.

12. Verfahren gemäß einem der vorhergehenden Ansprüche, **dadurch gekennzeichnet, dass** der Klebstoff expansionsfähige Füllstoffe mit unterschiedlichen Expansionsmechanismen oder - parametern enthält, sodass die Expansion zu unterschiedlichen Zeitpunkten für unterschiedliche Füllstoffe ausgelöst werden kann.

13. Verfahren nach einem der vorhergehenden Ansprüche, **dadurch gekennzeichnet, dass** wenn die Falten im wesentlichen zusammengedrückt sind, eine Schicht mit eingebetteten expansionsfähigen, Füllstoffkörpern, beispielsweise in der Form von Mikrokugeln, und eine vergleichsweise kleine Menge von lösungsmittelbasiertem Klebstoff auf die Filterflächen aufgebracht wird, die die Spitzen der Falten bilden, der Klebstoff getrocknet wird und der Füllstoff dann expandiert wird, indem die Filterfalten gleichzeitig mit der Expansion der Schicht geöffnet werden, sodass sie luftdurchlässig wird.

14. Faltenfilter mit Klebstofffäden als Abstandselemente zwischen den Falten, **gekennzeichnet durch** das Vorhandensein von expandierten Mikrokugeln in dem Klebstoff, der die Abstandselemente bildet.

## Revendications

1. Procédé pour la fabrication de filtres plissés avec des. éléments de distance constitués par des cordons de colle, **caractérisé en ce que** les cordons de colle contiennent des matières de remplissage expansibles avec une expansion qui peut être déclenchée à la demande.

2. Procédé selon la revendication 1, **caractérisé en ce que** la colle est séchée ou solidifiée avant que la matière de remplissage ne s'expanse.

3. Procédé selon la revendication 1, **caractérisé en ce qu'**après l'application de la colle, le filtre est plié et la colle durcit, après quoi la matière de remplissage est expansée directement après le durcissement ou un peu plus tard, par exemple après le transport sur le lieu d'utilisation.

4. Procédé selon la revendication 1, **caractérisé en ce que** la colle est séchée ou solidifiée après que la matière de remplissage s'est expansée ou simultanément à l'expansion de la matière de remplissage.

5. Procédé selon la revendication 1, **caractérisé en ce que** la matière de remplissage est expansée lorsque le filtre a été ou est en train d'être monté dans un châssis ou directement dans certains appareils.

6. Procédé selon la revendication 1, **caractérisé en ce que** la colle avec la matière de remplissage expansible est appliquée, expansée et durcie, après quoi on applique plus de colle avec une matière de remplissage aux mêmes endroits pour donner des éléments de distance plus épais ou pour obtenir d'autres objets.

7. Procédé selon l'une quelconque des revendications précédentes, **caractérisé en ce que** la matière de remplissage expansible est constituée de microsphères avec un déclenchement contrôlable de l'expansion qui est indépendant de l'administration et du séchage de la colle.

8. Procédé selon la revendication 7, **caractérisé en ce que** les sphères sont expansées en étant chauffées.

9. Procédé selon la revendication 7 ou 8, **caractérisé en ce que** la colle utilisée est à base de solvant, en particulier à base d'eau et/ou en fusion.

10. Procédé selon la revendication 7, 8 ou 9, **caractérisé en ce que** la colle utilisée reste collante après le séchage.

11. Procédé selon l'une quelconque des revendications précédentes, **caractérisé en ce que** la matière de remplissage expansible a un mécanisme d'expansion indépendant qui peut être essentiellement indépendant de la vaporisation du solvant, en particulier l'expansion peut être déclenchée à une étape ultérieure.

12. Procédé selon l'une quelconque des revendications précédentes, **caractérisé en ce que** la colle contient des matières de remplissage expansibles avec différents mécanismes ou paramètres d'expansion de sorte que l'expansion peut être déclenchée à des moments différents pour des matières de remplissage différentes.

13. Procédé selon l'une quelconque des revendications précédentes, **caractérisé en ce qu'**avec les plis essentiellement comprimés une couche avec des corps de matière de remplissage expansible noyés, par exemple sous la forme de microsphères, et une quantité relativement petite de colle à base de solvant est appliquée sur les faces de filtre constituées des pointes des plis, la colle est séchée et ensuite la matière de remplissage est expansée, ouvrant les plis du filtre en même temps que la couche est expansée de sorte qu'elle devient perméable à l'air.

14. Filtre plissé avec des cordons de colle en tant qu'éléments de distance entre les plis, **caractérisé par** la présence de microsphères expansées dans la colle qui constituent les éléments de distance.
